Europäisches Patentamt

European Patent Office

Office européen des brevets

(19)

(11) **EP 0 639 880 B2**

(12) # NEUE EUROPÄISCHE PATENTSCHRIFT

(45) Veröffentlichungstag und Bekanntmachung des Hinweises auf die Entscheidung über den Einspruch:
**24.01.2001 Patentblatt 2001/04**

(51) Int Cl.[7]: **H02J 3/18**

(45) Hinweis auf die Patenterteilung:
**22.10.1997 Patentblatt 1997/43**

(21) Anmeldenummer: **94111523.0**

(22) Anmeldetag: **23.07.1994**

(54) **Verfahren zur Stabilisierung eines Stromnetzes gegen Blindlastschwankungen und Blindleistungskompensationseinrichtung**

Method for stabilising a network against reactive power oscillations and device for compensating reactive power

Méthode de stabilisation d'un réseau vis à vis des oscillations d'énergie réactive et appareil de compensation d'énergie réactive

(84) Benannte Vertragsstaaten:
**AT DE ES FR IT PT**

(30) Priorität: **19.08.1993 DE 4327894**

(43) Veröffentlichungstag der Anmeldung:
**22.02.1995 Patentblatt 1995/08**

(73) Patentinhaber: **ABB Industrie AG 5401 Baden (CH)**

(72) Erfinder:
• **Aebischer, Hanspeter
CH-5619 Büttikon (CH)**
• **Mathys, Roger
CH-6373 Ennetbürgen (CH)**

(74) Vertreter: **ABB Patent Attorneys
c/o ABB Business Services Ltd,
Intellectual Property (SLE-I),
Haselstrasse 16/699
5401 Baden (CH)**

(56) Entgegenhaltungen:
EP-A- 0 498 239      DE-A- 3 708 468
DE-A- 3 915 213      US-A- 5 155 740

• **Hauszeitschrift der AEG-Telefunken, A 52 V2-6.16/0682**
• **Hauszeitschrift der AEG AG, A 52 V1-8.49/0885**
• **Auszug aus der Hauszeitschrift der AEG AG, A 95 V5-7.74/1290**
• **Hauszeitschrift de AEG AG, A 52 V1-8.49/0885**
• **Stromlaufplan des VAROVERTERS der AEG-Telefunken AG, Blatt 17, 19, und Blatt 21**
• **Hauszeitschrift der AEG-Telefunken, E 44 V2-6.24/1081**
• **G. Schmidt, "Grundlagen der Reglungstechnik" , Springer Verlag, 2. Auflage 1989, S. 269-274**

**EP 0 639 880 B2**

**Beschreibung**

TECHNISCHES GEBIET

Bei der Erfindung wird ausgegangen von einem Verfahren zur Stabilisierung einer Stromversorgungseinrichtung oder eines Stromnetzes gegen Blindlastschwankungen mindestens einer elektrischen Einrichtung oder Anlage variabler Blindlast nach dem Oberbegriff des Patentanspruchs 1 und von einer Blindleistungskompensationseinrichtung nach dem Oberbegriff des Patentanspruchs 6.

STAND DER TECHNIK

Aus der US-A-5,155,740 ist eine Flicker-Kompensationseinrichtung für Gleichstromlichtbogenöfen angegeben bekannt, bei der eine Blindleistungsregelung nur in Abhängigkeit von der detektierten Blindleistung des Lichtbogenofens erfolgt.

Bei dieser Kompensation werden Ströme in Filterzweigen und Hilfseinrichtungen nicht berücksichtigt. Bei kleinen Elektrodenströmen kann die Blindleistung des Ofens zu klein werden. Mit fest eingebauten Kondensatorbänken führt dies zu einer Überkompensation, was häufig von Netzbetreibern nicht akzeptiert wird.

Aus der Druckschrift Nr. CH-IT 123 090 D, Kompensationsanlagen für die Industrie, der Schweizer Firma BBC Aktiengesellschaft Brown, Boveri & Cie. (jetzt: Asea Brown Boveri AG), CH-5401 Baden/Schweiz, Dezember 1983, S. 1 - 12, ist es bekannt, beim Betrieb von Lichtbogenöfen auftretende Blindlaständerungen mittels eines 3phasigen Reaktors aus 3 Luftdrosselspulen über Thyristor-Wechselstromsteller individuell für jede Phase zu steuern. Die Steuerung erfolgt in Abhängigkeit von der Netzspannung, dem Stromistwert des Lichtbogenofens und der Kompensationsanlage sowie vom Sollwert des Reaktorstromes. Parallel zu diesem Reaktor sind Kondensatoren geschaltet, die mit ihren Seriedrosseln und ggf. Dämpfungswiderständen als Blindleistungsquelle und gleichzeitig als Filter zur Absaugung von Oberschwingungsströmen unterschiedlicher Ordnungszahlen wirken. Die variable Blindlast des Reaktors und diejenige der Verbraucher addieren sich dabei in der Weise, daß die Summe beider Blindlasten konstant ist und zusammen mit der konstanten kapazitiven Blindleistung der festen Kondensatorgruppen einen gewünschten cos φ-Wert ergibt.

Durch das Messen und Analysieren der Steuer- bzw. Regelgrößen ergibt sich eine relativ lange mittlere Totzeit des Systems von 5 ms.

Aus der EP-A1-0 498 239 ist es bekannt, einen Lichtbogenofen mit Gleichstromanspeisung mit 2 Regelkreisen zu regeln. Ein Stromregler sorgt für konstanten Strom, entsprechend einem vorgegebenen Stromsollwert. Ein Elektrodenregelkreis beeinflußt die Position der Elektrode und somit die Lichtbogenlänge. Bei einer Verlängerung des Lichtbogens muß der Stromregler die Spannung erhöhen bzw. den Gleichrichter so ansteuern, daß der Strom konstant bleibt. Dies geht jedoch nur, solange Spannungsreserve vorhanden ist. Die Regelung der Elektrode erfolgt mittels eines adaptierbaren Gleichspannungsreglers. Als Gleichspannungsistwert dient die Lichtbogenspannung, die über ein Dämpfungsglied einem Vergleicher bzw. Summierer zugeführt ist. Der Gleichspannungssollwert muß jeweils unter Berücksichtigung der Transformator-Spannungsstufe und des Elektrodenstromes für jeden Arbeitspunkt berechnet werden. Er wird zunächst der Transformatorstufe des Stromrichtertransformators, und damit dem möglichen Spannungshub des Stromrichters entsprechend, mittels eines Begrenzers so begrenzt, daß der Stromrichter stationär maximal knapp unterhalb der Gleichrichtergrenzlage betrieben wird. Der Sollwert wird geglättet dem Summierer zugeführt, um bei Spannungssollwertsprüngen kein Überschwingen des Istwertes zu bekommen, was ein Abreissen des Lichtbogens bewirken könnte. Über eine Kompensation von Blindleistungsschwankungen ist dort nichts ausgeführt.

Im Walzwek lisenburg (DE) war 1982 eine Anlage in Betrieb, bei der zur Kompensation von Blindleistungsschwankungen Strom und Spannung des speisenden Hochspannungsnetzes gemessen werden und daraus eine Netzblindleistung berechnet wird. Die Wirk- und Blindleistung des Walzmotors wird in Abhängigkeit eine Stellgrössensignals und eines Stromsollwertes berechnet. Nach Massgabe der Netzblindleistung eine Netzblindleistungssollwertes und der vorstehend berechneten Werte werden die Blindleistungsschwankungen durch Vorgabe einer Steuerspannung für den Kompensator kompensiert.

DARSTELLUNG DER ERFINDUNG

Die Erfindung, wie sie in den Patentansprüchen 1 und 4 definiert ist, löst die Aufgabe, ein Verfahren und eine Blindleistungskompensationseinrichtung zur Stabilisierung einer Stromversorgungseinrichtung oder eines Stromnetzes gegen Blindlastschwankungen mindestens einer elektrischen Einrichtung oder Anlage variabler Blindlast der eingangs genannten Art derart weiterzuentwickeln, daß Blindlastschwankungen besser kompensiert werden.

Ein Vorteil der Erfindung besteht darin, daß durch eine Erfassung des Summenstromes zur Kompensation der Blindleistungsschwankungen die Blindleistungen aller Lasten, die mit der zu kompensierenden Anlage in Verbindung stehen, relativ schnell kompensiert werden. Es resultiert eine konstante induktive Blindleistung für die gesamte Anlage, die mit fest eingebauten oder geschalteten Kondensatorbänken oder mit harmonischen Filtern kompensiert werden kann. Mit dieser Ausregelung der Blindlastschwankungen lassen sich Anlagen variabler Blindlast auch an sehr schwache Stromnetze anschließen.

Anlagen mit über 50 MW lassen sich somit an Stromnetze anschließen, deren Kurzschlußleistung mindestens gleich der 10fachen Anlagenleistung ist.

KURZE BESCHREIBUNG DER ZEICHNUNGEN

Die Erfindung wird nachstehend anhand eines Ausführungsbeispiels erläutert. Es zeigen:

Fig. 1    einen Gleichstrom-Lichtbogenofen mit einem Stromregelkreis, einem Elektrodenregelkreis und einem Blindleistungsregelkreis,

Fig. 2    ein Kennliniendiagramm für die Bestimmung von Wirk- und Blindleistung des Lichtbogenofens in Abhängigkeit von einem Zündwinkelistwertsignal und Stromistwertsignal des Lichtbogenofens gemäß Fig. 1 und

Fig. 3    eine Kennlinie zur Ermittlung des Zündwinkels für den Blindleistungsregelkreis in Abhängigkeit von der Gesamtblindleistung einer Anlage mit dem Lichtbogenofen gemäß Fig. 1.

WEGE ZUR AUSFÜHRUNG DER ERFINDUNG

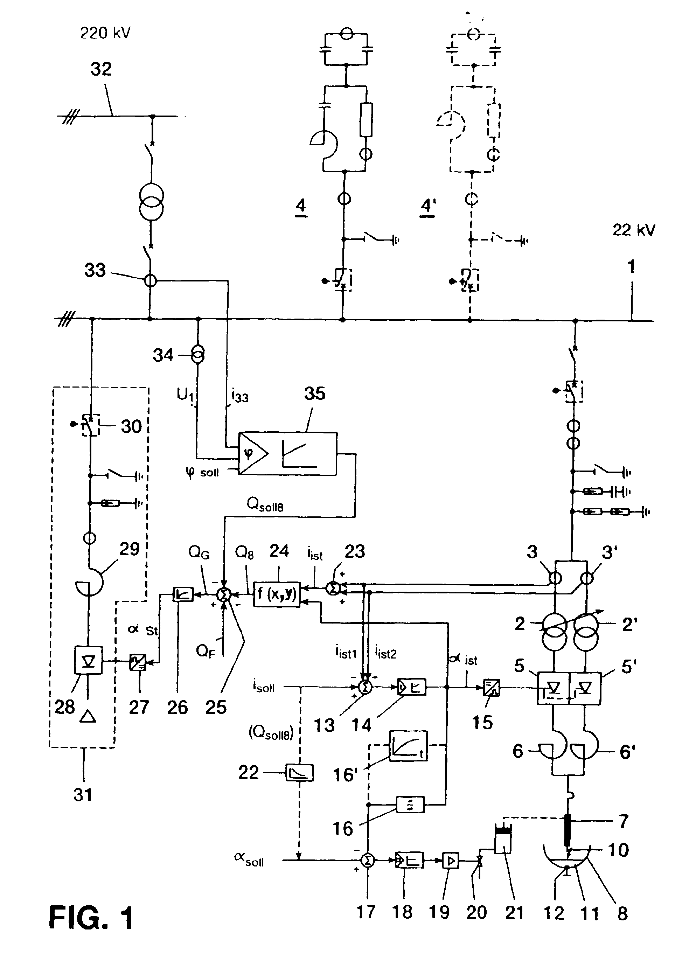

Die Figur 1 zeigt einen Lichtbogenofen (8) mit einer Elektrode bzw. Kathode (7), welche über 2 Reaktoren bzw. Drosselspulen (6, 6'), die in Parallelzweigen mit je einem Gleichrichter (5, 5'), je einem Ofentransformator (2, 2') mit mehreren Schaltstufen und je einem Stromwandler (3, 3') in Reihe geschaltet sind, an ein Wechselstromnetz (1) mit einer Wechselspannung von 22 kV angeschlossen ist. Eine im Bodenbereich des Lichtbogenofens (8) angeordnete 2. Elektrode bzw. Anode (12) ist mit dem Pluspol des Gleichrichters (5) verbunden (nicht dargestellt). Zwischen dem unteren Ende der Kathode (7) und einem nicht dargestellten zu schmelzenden Gut bzw Schrott sowie mit der Oberfläche einer Schmelze bzw. eines Schmelzbades (11) brennt ein Lichtbogen (10).

Mittels der Stromwandler (3, 3') in den Wechselstromzuleitungen zu den Gleichrichtern (5, 5') werden Teilst-romistwertsignale ($i_{ist1}$, $i_{ist2}$) detektiert und nichtnegierenden Eingängen eines Summierers (23) sowie 2 negierenden Eingängen eines Vergleichers bzw. Summierers (13) zugeführt. Einem nichtnegierenden Eingang dieses Summierers (13) ist z. B. von einem nicht dargestellten Potentiometer ein vorgebbares Stromsollwertsignal ($i_{soll}$) zugeführt. Aus-gangsseitig ist der Summierer (13) mit einem Stromregler (14) mit Proportional-Integral-Charakteristik verbunden, welcher ausgangsseitig ein Gleichrichter-Stellgrößensiganl ($\alpha_{ist}$), entsprechend einem Zündwinkel, einem Zündimpulswandler (15) liefert, der ausgangsseitig die Gleichrichter (5, 5') steuert.

Das Gleichrichter-Stellgrößensiganl ($\alpha_{ist}$) ist über ein Dämpfungsglied (16') oder ein Bandpassfilter (16) zur Signalanpassung, Grenzwertüberwachung und Aussiebung unerwünschter Frequenzen mit einem negierenden Eingang eines Summierers (17) verbunden, dessen nichtnegierendem Eingang ein vorgebbares Elektrodenregler-Füh-rungsgrößensignal ($\alpha_{soll}$), entsprechend einem Zündwinkelsollwert im Bereich von 15° - 50°, vorzugsweise im Bereich von 25° - 35°, zugeführt ist. Ausgangsseitig ist der Summierer (17) mit einem Elektrodenregler (18) mit einer Proportionalcharakteristik verbunden, der ausgangsseitig über einen Ventilverstärker (19) auf ein Ventil (20) einer Elektrodenverstelleinrichtung (21) wirkt. Die Elektrodenverstelleinrichtung (21), z. B. eine hydraulische Pumpe mit einer Verstellmechanik und einem Elektrodengeschwindigkeitsregler, ist mechanisch mit der Kathode (7) gekoppelt und ermöglicht deren Höhenverstellung; sie wirkt als ein Verzögerungsglied 1. Ordnung.

Die Elektrodenregelung arbeitet etwa 10mal langsamer als die Stromregelung. Die Höhenverstellung der Kathode (7) erfolgt so, daß der Gleichrichter (5) im Mittel mit einer Aussteuerung von z. B. 25°el. arbeitet, unabhängig von der Sekundärspannung des Ofentransformators (2) und vom eingestellten Stromsollwert ($i_{soll}$). Der Einfachheit halber sind Werte und ihnen zugeordnete Signale gleich bezeichnet.

Die vom Bandpaßfilter (16) auszusiebenden Frequenzen umfassen Frequenzen im Bereich von 0,5 Hz - 20 Hz

Mit der Regelung auf konstante Aussteuerung am Gleichrichter (5) erreicht man einen konstanten mittleren Leistungsfaktor im speisenden Wechselstromnetz (1). Die Leistung eines Arbeitspunktes ist sehr einfach bestimmt mit der Anwahl einer Spannungsstufe des Ofentransformators (2) und der Vorgabe des Gleichstromes.

Will man mit einer Spannungsstufe des Ofentransformators (2) verschiedene Arbeitspunkte bzw. eine variable Leistung fahren, so wird der Stromsollwert ($i_{soll}$) entsprechend vorgegeben. Bei reduziertem Strom aber immer noch gleicher Aussteuerung am Gleichrichter (5) erhält man wohl kleinere Leistungen. Infolge geringerer Spannungsverluste im Wechselstromnetz (1) wird der Lichtbogen (10) jedoch länger. Der Ofenprozeß verlangt aber bei kleineren Leistungen auch kürzere Lichtbogen (10). Um dies zu erreichen, kann man bei einer Veränderung des Stromsollwertes ($i_{soll}$) gleichzeitig auch einen entsprechenden neuen Sollwert für die Aussteuerung des Gleichrichters (5) vorgeben. Zu diesem Zweck ist ein näher in der EP-A1-0 498 239 beschriebener Funktionsgeber (22) vorgesehen, der in Abhängigkeit

vom Stromsollwert ($i_{soll}$) das Elektrodenregler-Führungsgrößensignal ($\alpha_{soll}$) vorgibt, wie in Fig. 1 gestrichelt angedeutet. Damit ist es auch möglich, den Leistungsbereich zu vergrößern.

Zur Kompensation der variablen Blindleistung des Lichtbogenofens (8) ist ein 3phasiger Blindleistungskompensator (31) vorgesehen, der je Wechselstromphase einen Wechselstromsteller (28) in Reihe mit einer Drosselspule (29) und einem Schalter (30) aufweist, der mit dem Wechselstromnetz (1) verbunden ist. Die 3 Wechselstromsteller (28) sind untereinander in Dreieckschaltung verbunden und werden je von einem Zündimpulswandler (27) gesteuert.

Das Wechselstromnetz (1) ist über einen Stromwandler (33), an dem eine Gesamtstromstärke ($i_{33}$) der gesamten Anlage mit nicht dargestellten Hilfsbetrieben und Filterzweigen (4, 4') für kapazitive Blindleistung abgreifbar ist, ferner über einen Hochspannungstransformator und 2 Schalter an ein 3phasiges Hochspannungsnetz (32) mit einer Wechselspannung von 220 kV angeschlossen. Die Gesamtstromstärke ($i_{33}$), eine mittels eines Spannungsdetektors (34) detektierte Netzspannung ($U_1$) des Wechselstromnetzes (1) und ein vorgebbarer Sollphasenwinkel ($\varphi_{soll}$) sind dem Eingang eines Phasenwinkelreglers (35) zugeführt, der ausgangsseitig ein Sollblindleistungssignal ($Q_{soll8}$) für den Lichtbogenofen (8) an einen negierenden Eingang eines Summierers (25) liefert. Einem weiteren negierenden Eingang des Summierers (25) ist ein Blindleistungsistwertsignal ($Q_8$) vom Ausgang eines Funktionsgebers (24) zugeführt, der eingangsseitig von dem Summierer (23) ein Stromistwertsignal ($i_{ist}$) mit $i_{ist} = i_{ist1} + i_{ist2}$ und vom Ausgang des Stromreglers (14) das Gleichrichter-Stellgrößensignals ($\alpha_{ist}$) erhält. Einem nichtnegierenden Eingang des Summierers (25) ist ein Filterblindleistungssignal ($Q_F$), entsprechend der konstanten kapazitiven Blindleistung der Filterzweige (4, 4') zugeführt. Ausgangsseitig liefert der Summierer (25) ein Gesamtblindleistungssignal ($Q_G$), entsprechend $Q_G = Q_F - Q_8 - Q_{soll8}$, an einen Funktionsgeber (26), der ausgangsseitig ein Stabilisierungszündwinkelsignal ($\alpha_{St}$) an den Zündimpulswandler (27) liefert.

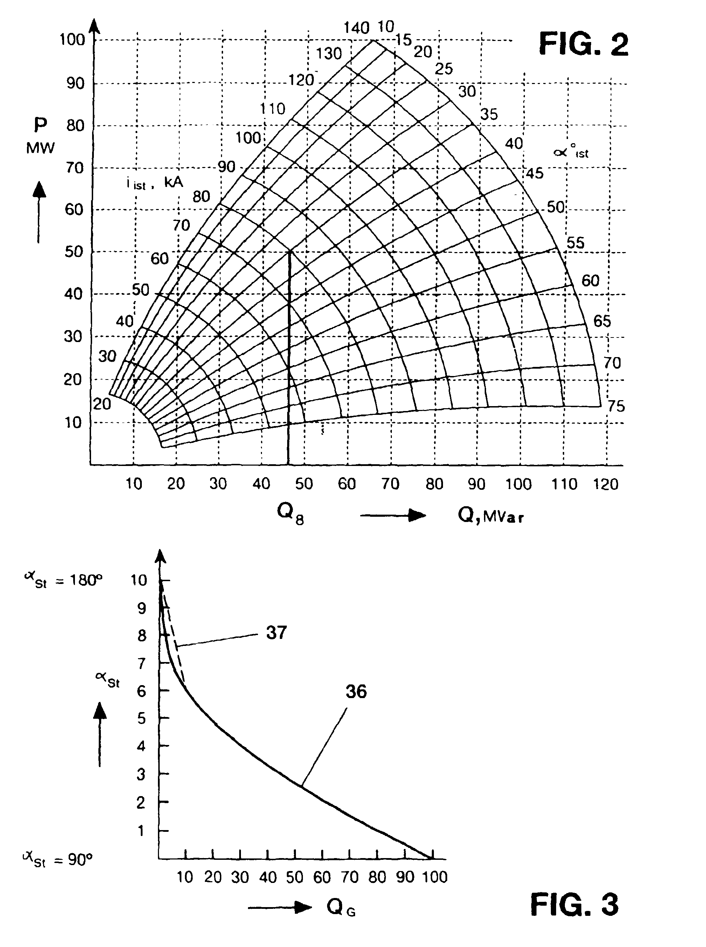

Fig. 2 zeigt ein Kennlinienfeld der mittels des Funktionsgebers (24) realisierten Funktion:

$$Q_8 = k1 \cdot i_{ist} \cdot [1 - (\cos \alpha_{ist} - k2 \cdot i_{ist})^2]^{0,5},$$

wobei k1 und k2 anlagenspezifische Faktoren sind mit $0,1 \leq k1 \leq 1$, vorzugsweise mit $0,3 \leq k1 \leq 0,6$ und $0,7 \cdot 10^{-3} \leq k2 \leq 1,3 \cdot 10^{-3}$, vorzugsweise mit $0,9 \cdot 10^{-3} \leq k2 \leq 1,1 \cdot 10^{-3}$. Dabei sind das Gleichrichter-Stellgrößensiganl ($\alpha_{ist}$) in Grad, das Stromistwertsignal ($i_{ist}$) in kA, auf der Ordinate die Wirkleistung (P) in MW und auf der Abszisse die Blindleistung (Q) in MVar angegeben. Für einen Wirkleistungswert (P) von 50 MW und ein Gleichrichter-Stellgrößensignal ($\alpha_{ist}$) von 35° ergibt sich z. B. eine Blindleistung ($Q_8$) von 46 MVar.

Fig. 3 zeigt eine Kennlinie (36) der mittels des Funktionsgebers (26) realisierten Funktion:

$$Q_G \approx \alpha_{St}°/90° - 2 - (\sin 2 \cdot \alpha_{St})/\pi,$$

wobei ($\alpha_{St}$) in Grad auf der Ordinate und ($Q_G$) in % auf der Abszisse aufgetragen sind. In der Praxis kann die ideale Kurve (36) durch gestrichelt angedeutete Segmente (37) angenähert und zur Ermittlung des Wertes des Stabilisierungszündwinkels ($\alpha_{St}$) herangezogen werden.

Das dargestellte Beispiel bezieht sich auf eine Anlage mit einer Wirkleistung (P) von 60 MW bei einem Gleichstrom von 100 kA und einer installierten Blind- bzw. Kompensationsleistung von 30 MVar. Die Anlage ist so ausgelegt, dass sich bei 100 kA und einer Aussteuerung der Gleichrichter (5, 5') mit einem Gleichrichter-Stellgrößensiganl ($\alpha_{ist}$) von 35° am einspeisenden Wechselstromnetz (1) ein Wirkfaktor $\cos \varphi = 0,9$ ergibt.

BEZEICHNUNGSLISTE

| | |
|---|---|
| 1 | Wechselstromnetz |
| 2, 2' | Ofentransformatoren mit mehreren Schaltstufen |
| 3, 3', 33 | Stromwandler |
| 4, 4' | Filterzweige für kapazitive Blindleistung |
| 5, 5' | Gleichrichter |
| 6, 6', 29 | Drosselspulen, Reaktoren |
| 7 | Kathode, Elektrode |
| 8 | Lichtbogenofen |
| 10 | Lichtbogen |
| 11 | Schmelze, Schmelzbad |
| 12 | Anode, 2. Elektrode |

| 13, 17, 23, 25 | Summierer |
|---|---|
| 14 | Stromregler |
| 15, 27 | Zündimpulswandler |
| 16 | Bandpaßfilter |
| 16' | Dämpfungsglied |
| 18 | Elektrodenregler |
| 19 | Ventilverstärker |
| 20 | Ventil |
| 21 | Elektrodenverstelleinrichtung |
| 22, 24, 26 | Funktionsgeber |
| 28 | Wechselstromsteller |
| 30 | Schalter |
| 31 | Blindleistungskompensator |
| 32 | Hochspannungsnetz |
| 34 | Spannungsdetektor |
| 35 | Phasenwinkelregler |
| 36 | Kennlinie |
| 37 | Segment |

| $COS\ \varphi$ | Wirkfaktor |
|---|---|
| $i_{33}$ | Gesamtstromstärke |
| $i_{ist}$ | Stromistwertsignal |
| $i_{ist1}$, $i_{ist2}$ | Teilstromistwertsignale |
| $i_{soll}$ | Stromsollwertsignal |
| $Q_F$ | Filterblindleistungssignal von 4, 4' |
| $Q_G$ | Gesamtblindleistungssignal |
| $Q_8$ | Blindleistungsistwertsignal von 8 |
| $Q_{soll8}$ | Sollblindleistungssignal von 8 |
| $U_1$ | Netzspannung von 1 |

| $\alpha_{ist}$ | Gleichrichter-Stellgrößensiganl, Zündwinkelistwert |
|---|---|
| $\alpha_{soll}$ | Elektrodenregler-Führungsgrößensignal, Zündwinkelsollwert |
| $\alpha_{St}$ | Zündwinkel für 27, Stabilisierungszündwinkelsignal |
| $\varphi_{soll}$ | Sollphasenwinkel |

## Patentansprüche

1. Verfahren zur Stabilisierung einer Stromversorgungseinrichtung oder eines Stromnetzes (1) gegen Blindlastschwankungen mindestens einer elektrischen Einrichtung oder Anlage (8) variabler Blindlast,

a) deren Stromstärke mittels eines Regelsignals oder Stellgrössensignals ($\alpha_{ist}$) auf einen vorgebbaren Stromsollwert ($i_{soll}$) oder Blindstromsollwert ($Q_{8soll}$) geregelt wird,
b) wobei die in der mindestens einen elektrischen Anlage (8) erzeugten Blindleistungsschwankungen in Abhängigkeit von dem Stellgrössensignal ($\alpha_{ist}$) und
c) in Abhängigkeit von einem Stromistwersignal ($i_{ist}$) oder von dem Stromsollwert ($i_{soll}$) dieser Anlage (8) kompensiert werden, wobei
d) die Blindleistungsschwankungen in Abhängigkeit von einer Gesamtstromstärke ($i_{33}$) des die mindestens ein Anlage (8) speisenden Stromnetzes (1) und in Abhängigkeit eines Blindleistungsistwertsignals ($Q_8$) und eines Sollblindleistungssignals ($Q_{8soll}$) der Anlage (8) kompensiert werden, wobei
e) die Gesamtstromstärke ($i_{33}$) ausser dem Strom durch die mindestens eine Anlage (8) noch mindestens den Strom durch mindestens eine Blindleitungs-Kompensationseinrichtung (31; 4, 4') umfasst, und wobei
f) das Blindleistungsistwertsignals ($Q_8$) nach Massgabe der Formel

$$Q_8 = k_1 \cdot i_{ist} \cdot \left[ 1 - \left( \cos \alpha_{ist} - k_2 \cdot i_{ist} \right)^2 \right]^{0.5}$$

gebildet wird, mit

k1, k2: anlagenspezifische Faktoren mit $0,1 \leq k1 \leq 1$ bzw. $0,7 \cdot 10^{-3} \leq k2 \leq 1,3 \cdot 10^{-3}$ ; insbesondere $0,3 \leq k1 \leq 0,6$ und $0,9 \cdot 10^{-3} \leq k2 \leq 1,1 \cdot 10^{-3}$.

**2.** Verfahren nach Anspruch 1, dadurch gekennzeichnet, daß das Sollblindleistungssignal ($Q_{soll8}$) ein Regelsignal ist, das

a) in Abhängigkeit von einer Netzspannung ($U_1$) eines die mindestens eine Anlage (8) speisenden Wechselstromnetzes (1),

b) ferner in Abhängigkeit von der Gesamtstromstärke ($i_{33}$) und

c) in Abhängigkeit von einem vorgebbaren Sollphasenwinkel ($\varphi_{soll}$) gebildet ist.

**3.** Verfahren nach einem der Ansprüche 1 und 2, dadurch gekennzeichnet, daß die Blindleistungsschwankungen in Abhängigkeit von einem Stabilisierungszündwinkelsignal ($\alpha_{St}$) kompensiert werden, das gemäß:

$$Q_G \approx \alpha_{St}°/90° - 2 - (\sin 2 \cdot \alpha_{St})/\pi$$

gebildet ist, wobei $Q_G$ ein Gesamtblindleistungssignal für die Blindleistung der gesamten Anlage ist gemäß

$$Q_G = Q_F - Q_8 - Q_{soll8},$$

mit $Q_F$ = Filterblindleistungssignal, $Q_8$ = Blindleistungsistwertsignal und $Q_{soll8}$ = Sollblindleistungssignal der mindestens einen Anlage (8).

**4.** Blindleistungskompensationseinrichtung zur Durchführung des Verfahrens nach einem der vorhergehenden Ansprüche,

a) mit mindestens einer Anlage (8) variabler Blindleistung,

b) mit mindestens einem Filterzweig (4, 4') mit kapazitiver Blindleistung und

c) mit mindestens einem Blindleistungskompensator (31), der mindestens ein steuerbares Ventil (28) aufweist,

d) wobei ein Phasenwinkelregler (35) vorgesehen ist, der eingangsseitig mit mindestens einem Stromwandler (33) und ausgangsseitig mit dem mindestens einen steuerbaren Ventil (28) des Blindleistungskompensators (31) in Wirkverbindung steht, und wobei

e) der Phasenwinkelregler (35) eingangsseitig mit mindestens einem Stromwandler (33) zur Erfassung der Gesamtstromstärke (i33) und

f) ausgangsseitig über einen 1. Funktionsgeber (26) mit dem mindestens einen steuerbaren Ventil (28) des Blindleistungskompensators (31) in Wirkverbindung steht,

g) wobei an dem 1. Funktionsgeber (26) eingangsseitig ein Gesamtblindleistungssignal $Q_G$ anliegt und

h) ausgangsseitig ein Stabilisierungszündwinkelsignal $\alpha_{St}$ abgegeben wird gemäß:

$$Q_G \approx \alpha_{St}°/90° - 2 - (\sin 2 \cdot \alpha_{St})/\pi.$$

**5.** Blindleistungskompensationseinrichtung nach Anspruch 4, dadurch gekennzeichnet,

a) daß der Phasenwinkelregler (35) über einen Summierer (25) mit dem 1. Funktionsgeber (26) in Wirkverbindung steht und

b) daß der Summierer (25) über einen 2. Funktionsgeber (24) mit der mindestens einen Anlage (8) in Wirkverbindung steht, welcher 2. Funktionsgeber (24) in Abhängigkeit von einem Stromistwertsignal $i_{ist}$ und einem Gleichrichter-Stellgrößensigans $\alpha_{ist}$ dieser mindestens einen Anlage (8) ausgangsseitig ein Blindleistungsistwertsignal $Q_8$ abgibt gemäß:

$$Q_8 = k1 \cdot i_{ist} \cdot [1 - (\cos \alpha_{ist} - k2 \cdot i_{ist})^2]^{0,5},$$

wobei k1 und k2 anlagenspezifische Faktoren sind mit

$$0{,}1 \leq k1 \leq 1 \text{ und } 0{,}7 \cdot 10^{-3} \leq k2 \leq 1{,}3 \cdot 10^{-3},$$

c) insbesondere mit $0{,}3 \leq k1 \leq 0{,}6$ und $0{,}9 \cdot 10^{-3} \leq k2 \leq 1{,}1 \cdot 10^{-3}$.

**6.** Blindleistungskompensationseinrichtung nach Anspruch 5, dadurch gekennzeichnet, daß dem Summierer (25) eingangsseitig ein Filterblindleistungssignal ($Q_F$) zugeführt ist.

## Claims

**1.** A method for stabilizing a power supply device or a power system (1) against reactive-load fluctuations of at least one electrical device or system (8) of variable reactive load,

a) the current intensity of which is regulated to a predeterminable nominal current value ($I_{nom}$) or nominal reactive current value ($Q_{8nom}$) by means of a control signal or manipulated-variable signal ($\alpha_{act}$),
b) the reactive-power fluctuations generated in the at least one electrical system (8) being compensated for as a function of the manipulated-variable signal ($\alpha_{act}$) and
c) as a function of an actual current signal ($i_{act}$) or on the nominal current value ($i_{nom}$) of this system (8), wherein
d) the reactive-power fluctuations are compensated for as a function of a total current intensity ($i_{33}$) of the power system (1) feeding the at least one system (8) and as a function of an actual reactive-power value signal ($Q_8$) and a nominal reactive-power signal ($Q_{8nom}$) of the system (8),
e) the total current intensity ($i_{33}$) also comprising, apart from the current through the at least one system (8), at least the current through at least one reactive-power compensation device (31; 4, 4'), and
f) the actual reactive-power value signal ($Q_8$) being formed in accordance with the formula

$$Q_8 = k_l - i_{act}\,[1-(\cos\alpha_{act} - k_2 \cdot i_{act})^2]^{0.5},$$

where
k1, k2: system-specific factors with $0.1 \leq k1 \leq 1$ or, respectively, $0.7*10^{-3} \leq k2 \leq 1.3*10^{-3}$; especially $0.3 \leq k1 \leq 0.6$ and $0.9*10^{-3} \leq k2 \leq 1.1*10^{-3}$.

**2.** The method as claimed in claim 1, characterized in that the nominal reactive-power signal ($Q_{nom8}$) is a control signal which is formed

a) as a function of a power system voltage ($U_1$) of an alternating current power system (1) feeding the at least one system (8),
b) also as a function of the total current intensity ($i_{33}$) and
c) as a function of a predeterminable nominal phase angle ($\varphi_{nom}$).

**3.** The method as claimed in one of claims 1 and 2, characterized in that the reactive-power fluctuations are compensated for as a function of a stabilization firing angle signal ($\alpha_{St}$) which is formed in accordance with:

$$Q_G = \alpha_{St}°/90° - 2 -(\sin 2\cdot\alpha_{St})/\pi$$

where $Q_G$ is a total reactive-power signal for the reactive power of the entire system, according to

$$Q_G = Q_F - Q_8 - Q_{nom8},$$

where $Q_F$ = filter reactive-power signal, $Q_8$ = actual reactive-power value signal and $Q_{nom8}$ = nominal reactive-power signal of the at least one system (8).

**4.** A reactive-power compensation device for carrying out the method as claimed in one of the preceding claims, comprising

a) at least one system (8) with variable reactive power,

b) at least one filter branch (4, 4') with capacitive reactive power and

c) at least one reactive-power compensator (31) which has at least one controllable valve (28),

d) a phase-angle controller (35) being provided which is effectively connected to at least one current transformer (33) at the input and to the at least one controllable value (28) of the reactive-power compensator (31) at the output, and, wherein

e) the phase angle controller (35) is effectively connected to at least one current transformer (33) for detecting the total current intensity (i33) at the input and

f) via a first function generator (26) to the at least one controllable value (28) of the reactive-power compensator (31) at the output,

g) a total reactive-power signal $Q_G$ being present at the input at the first function generator (26) and

h) a stabilization firing angle signal $\alpha_{St}$ being delivered at the output, in accordance with

$$Q_G \approx \alpha_{St}°/90° - 2 - (\sin 2 \cdot \alpha_{St})/\pi.$$

**5.** The reactive-power compensation device as claimed in claim 4, characterized in that

a) the phase angle controller (35) is effectively connected to the first function generator (26) via an adder (25) and

b) that the adder (25) is effectively connected to the at least one system (8) via a second function generator (24) which delivers at its output an actual reactive-power value signal $Q_8$, as a function of an actual current value signal $i_{act}$ and a rectifier manipulated-variable signal $\alpha_{St}$ of this at least one system (8), in accordance with

$$Q_8 = k1 \cdot i_{act} \cdot [1 - (\cos \alpha_{St} - k2 \cdot i_{act})^2]^{0.5},$$

where k1 and k2 are system-specific factors, where

$$0.1 \leq k1 \leq 1 \text{ and } 0.7 \cdot 10^{-3} \leq k2 \leq 1.3 \cdot 10^{-3},$$

c) especially $0.3 \leq k1 \leq 0.6$ and $0.9 \cdot 10^{-3} \leq k2 \leq 1.1 \cdot 10^{-3}$.

**6.** The reactive-power compensation device as claimed in claim 5, characterized in that the input of the adder (25) is supplied with a filter reactive-power signal ($Q_F$).

**Revendications**

**1.** Méthode de stabilisation d'un dispositif d'alimentation électrique ou d'un réseau électrique (1) contre les variations de la charge réactive d'au moins un dispositif ou équipement électrique (8) à charge réactive variable,

a) dont l'intensité du courant est régulée à une valeur de consigne du courant ($i_{soll}$) ou à une valeur de consigne de la puissance réactive ($Q_{soll8}$) pouvant être prédéfinie à l'aide d'un signal de régulation ou d'un signal de variable réglante ($\alpha_{ist}$),

b) les variations de puissance réactive produites dans l'au moins un équipement électrique (8) étant compensées en fonction du signal de variable réglante ($\alpha_{ist}$) et

c) en fonction d'un signal de valeur réelle du courant ($i_{ist}$) ou d'une valeur de consigne du courant ($i_{soll}$) de cet équipement (8),

d) les variations de la puissance réactive étant compensées en fonction d'une intensité du courant total ($i_{33}$) du réseau électrique (1) qui alimente l'au moins un équipement (8) et en fonction d'un signal de valeur réelle de la puissance réactive ($Q_8$) et d'un signal de puissance réactive de consigne ($Q_{soll8}$) de l'équipement (8), et

e) l'intensité du courant total ($i_{33}$) comprenant au moins le courant qui traverse au moins un dispositif de compensation de la puissance réactive (31 ; 4, 4') en plus du courant traversant l'au moins un équipement (8), et

f) le signal de la valeur réelle de la puissance réactive ($Q_8$) étant formé d'après l'équation :

$$Q_8 = k1 \times i_{ist} \times [1 - (cost\alpha_{ist} - k2 \times i_{ist})^3]^{0,5}$$

où k1 et k2 sont des facteurs spécifiques à l'équipement avec $0,1 \leq k1 \leq 1$ et $0,7.10^{-3} \leq k2 \leq 1.3.10^{-3}$ ; plus particulièrement avec $0,3 \leq k1 \leq 0,6$ et $0,9.10^{-3} \leq k2 \leq 1,1.10^{-3}$

2. Méthode selon la revendication 1, caractérisée en ce que le signal de puissance réactive de consigne ($Q_{soll8}$) est un signal de régulation qui

   a) est formé en fonction d'une tension du réseau ($U_1$) d'un réseau de courant alternatif (1) alimentant l'au moins un équipement (8),
   b) ainsi qu'en fonction de l'intensité du courant total ($i_{33}$) et
   c) en fonction d'un angle de phase de consigne ($\gamma_{soll}$) qui peut être prédéfini.

3. Méthode selon l'une des revendications 1 et 2, caractérisée en ce que les variations de la puissance réactive sont compensées en fonction d'un signal d'angle d'amorçage de stabilisation ($\alpha_{St}$) qui est formé d'après l'équation :

$$Q_G = \alpha_{St}°/90° - 2 - (sin2 \times \alpha_{St})/\pi,$$

$Q_G$ étant un signal de puissance réactive totale pour la puissance réactive de la totalité de l'équipement d'après l'équation

$$Q_G = Q_F - Q_8 - Q_{soll8},$$

avec $Q_F$ = signal de la puissance réactive du filtre, $Q_8$ = signal de la valeur réelle de la puissance réactive et $Q_{soll8}$ = signal de la puissance réactive de consigne de l'au moins un équipement (8).

4. Dispositif de compensation de la puissance réactive pour réaliser la méthode selon l'une des revendication précédentes,

   a) avec au moins un équipement (8) de puissance réactive variable,
   b) avec au moins une branche de filtrage (4, 4') à puissance réactive capacitive et
   c) avec au moins un compensateur de puissance réactive (31) qui présente au moins une valve commandable (28),
   d) un régulateur d'angle de phase (35) étant prévu, lequel est en liaison active du côté de son entrée avec au moins un transformateur de courant (33) et du côté de sa sortie avec l'au moins une valve commandable (28) du compensateur de puissance réactive (31), et
   e) l'entrée du régulateur d'angle de phase (35) étant en liaison active avec au moins un transformateur d'intensité (33) pour détecter l'intensité totale du courant (i33) et
   f) sa sortie étant en liaison active par le biais d'un 1er générateur de fonction (26) avec l'au moins une valve commandable (28) du compensateur de puissance réactive (31),
   g) un signal de puissance réactive totale $Q_G$ étant appliqué à l'entrée dudit 1er générateur de fonction (26) et
   h) un signal d'angle d'amorçage de stabilisation $\alpha_{St}$ selon l'équation :

$$Q_G = \alpha_{St}°/90° - 2 - (sin2 \times \alpha_{St})/\pi$$

étant délivré à sa sortie.

5. Dispositif de compensation de la puissance réactive selon la revendication 4, caractérisé en ce que,

   a) le régulateur d'angle de phase (35) est en liaison active avec le 1er générateur de fonction (26) par le biais d'un additionneur (25) et
   b) l'additionneur (25) est en liaison active par le biais d'un 2ème générateur de fonction (24) avec l'au moins un équipement (8), ledit 2ème générateur de fonction (24) délivrant en sortie un signal de valeur réelle de la puissance réactive $Q_8$ en fonction d'un signal de la valeur réelle du courant $i_{ist}$ et d'un signal de variable

réglante du redresseur $\alpha_{St}$ de cet au moins un équipement (8) d'après l'équation :

$$Q_8 = k1 \times i_{ist} \times [1 - (\cos\alpha_{ist} - k2 \times i_{ist})^2]^{0,5}$$

où k1 et k2 sont des facteurs spécifiques à l'équipement avec $0,1 \leq k1 \leq 1$ et $0,7.10^{-3} \leq k2 \leq 1,3.10^{-3}$
c) plus particulièrement avec $0,3 \leq k1 \leq 0,6$ et $0,9.10^{-3} \leq k2 \leq 1,1.10^{-3}$

**6.** Dispositif de compensation de la puissance réactive selon la revendication 5, caractérisé en ce qu'un signal de puissance réactive du filtre ($Q_F$) est acheminé à l'entrée de l'additionneur (25).

**FIG. 1**

**FIG. 2**

**FIG. 3**